# EUROPEAN PATENT APPLICATION

(11) **EP 2 078 967 A1**
(43) Date of publication of application: **15.07.2009**
(21) Application number: 09150061.1
(22) Date of filing: 05.01.2009
(51) Int. Cl.: G01S 13/95, G01S 7/04, G01S 7/06

(54) **System and method for selectable weather object display**

(30) Priority: 09.01.2008 US 20094 P; 26.12.2008 US 344381
(71) Applicant: Honeywell International Inc., Morristown, NJ 07962 (US)
(72) Inventor: Bunch, Brian P. c/o Honeywell International Inc., Morristown, NJ 07962-2245 (US); Christianson, Paul E. c/o Honeywell International Inc., Morristown, NJ 07962-2245 (US); Grove, Michael M. c/o Honeywell International Inc., Morristown, NJ 07962 (US)
(74) Representative: Buckley, Guy Julian

(57) **Abstract**

Systems and methods for presenting information pertaining to a weather object on a display (44). A process includes displaying on the aircraft display terrain information, weather reflectivity information, and at least one hazardous weather icon (206, 210) corresponding to the weather, wherein the hazardous weather icon (206, 210) indicates a determined hazard level associated with the weather; receiving a selection to display only the hazardous weather icon (206, 210); and in response to receiving the selection, continuing display of the hazardous weather icon (206, 210) and suppressing display of the terrain information and the weather reflectivity information.

## Description

### PRIORITY CLAIM

This patent application claims priority from copending U.S. Provisional Patent Application Serial No. 61/020,094 filed January 9, 2008, and entitled, "Selectable Weather Object Display," the contents of which are hereby incorporated by reference in its entirety.

### BACKGROUND OF THE INVENTION

Weather radar is a substantial aid for detecting adverse weather conditions that are hazardous to flying aircraft such as clear air turbulence, windshears, microbursts, and aircraft generated wake vortices. Pilots have exploited such radars to avoid these weather conditions, and due to the radars' capability of early detection, have done so with minimal impact upon the total flight time and distance.

In spite of the detailed information the radar returns present, it is still difficult to distinguish between various types of hazardous weather. There are many types of weather conditions that are detectable by radar and other systems. To the pilot, a wide variety and large amount of information presented on a display might act to confuse the pilot and present a danger to flight.

### SUMMARY OF THE INVENTION

A system and method for presenting information pertaining to a weather object on a display are provided. A process includes displaying on the aircraft display terrain information, weather reflectivity information, and at least one hazardous weather icon corresponding to the weather, wherein the hazardous weather icon indicates a determined hazard level associated with the weather; receiving a selection to display only the hazardous weather icon; and in response to receiving the selection, continuing display of the hazardous weather icon and suppressing display of the terrain information and the weather reflectivity information.

As will be readily appreciated from the foregoing summary, the invention provides an improved weather object presentation system to a pilot-user of an aircraft.

### BRIEF DESCRIPTION OF THE DRAWINGS

Preferred and alternative embodiments are described in detail below with reference to the following drawings:

FIGURE 1 is a block diagram of an exemplary embodiment of a weather display system;

FIGUREs 2A-2B is a flow diagram illustrating the process of a weather display system;

FIGURE 3 is a perspective diagram of volumes of scanned space scanned by multiple radar signals emanating from an aircraft;

FIGURE 4 is an abstract perspective diagram of how return from a single radar signal along a radial is mapped into a three-dimensional buffer;

FIGURE 5 is a perspective diagram of a single range bin that contains radar return data and a corresponding portion of voxels of the three-dimensional buffer;

FIGURE 6 is a view of a display with reflectivity data presented thereon; and

FIGURE 7 is a view of a display with reflectivity data removed.

### DETAILED DESCRIPTION OF THE PREFERRED EMBODIMENT

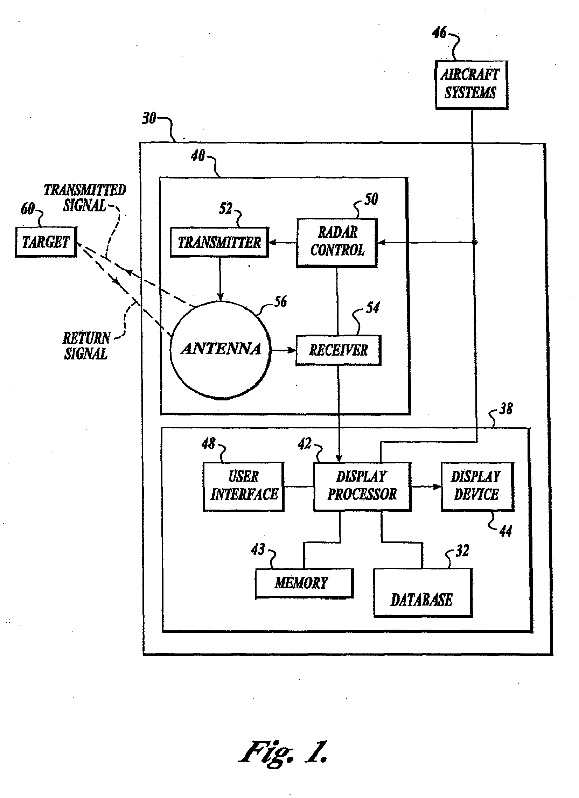

FIGURE 1 illustrates an embodiment of a weather display system 30 for providing improved radar return by optionally suppressing weather-based reflectivity returns. The exemplary weather display system 30 includes a weather radar system 40 and a display/interface front-end 38, and receives information from an aircraft systems 46. The display/interface front-end 38, includes a display processor 42, memory 43, a display device 44, a user interface 48, and a database 32. An example of the radar system 40 includes a radar control 50 (coupled to the user interface 48), a transmitter 52, a receiver 54, and an antenna 56. The radar control 50 controls the transmitter 52 and the receiver 54 for performing the sending and receiving of signals through the antenna 56. The weather radar system 40 and the display/interface front-end 38 are electronically coupled to the aircraft systems 46.

Radar relies on a transmission of a pulse of electromagnetic energy, referred to herein as a signal. The antenna 56 narrowly focuses the transmission of the signal pulse focused in comparison with the whole breadth of a desired downrange image. Like the light from a flashlight, this narrow signal illuminates any objects in its path and illuminated objects reflect the electromagnetic energy back to the antenna.

Reflectivity data corresponds to that portion of a radar's signal reflected back to the radar by liquids (e.g., rain) and/or frozen droplets (e.g., hail, sleet, and/or snow) residing in a weather object, such as a cloud or storm, or residing in areas proximate to the cloud or storm generating the liquids and/or frozen droplets.

A radar control 50 calculates the distance of the weather object relative to the antenna based upon the length of time the transmitted signal pulse takes in the transition from the antenna to the object and back to the antenna 56. The relationship between distance and time is linear as the velocity of the signal is constant, approximately the speed of light in a vacuum.

Various models may be used to determine information relating to various types of weather objects, such as weather hazards which may include storms, wind turbulence or shear, rain, snow, hail or the like. For example, a hail model may determine data that identifies weather objects having hail therein. A turbulence model may determine data that identifies weather objects associated with turbulence. Terrain models may determine data that identifies terrain objects. U. S. Pat. No. 7,109,913 and U. S. Pat. 7,109,912 to Paramore et al*.,* both of which are hereby incorporated by reference in their entirety, describes exemplary models for determining and displaying weather information.

Digital radars may inherently create storable numeric images of downrange targets. In order to sense the passage of time, digital radars rely upon the radar control 50 monitoring the antenna 56 in a series of discrete uniform sampling periods. The radar control 50 then calculates the distance from the antenna 56 by counting the number of discrete periods passing before the moment of arrival of the reflected signal. The strength of the reflected signal during the sampling period is stored in association with the identification of the period to create a range bin. That range bin contains reflectivity data representative of a range of distances from the antenna corresponding to the time from the beginning to the end of the sampling period. These are termed range bins because the data reflects blocks of distance rather than discrete points.

With digital radar, the radar control 50 associates the reflectivity data it receives with the corresponding range bin (range) and with the precise direction the target bears to the antenna. To derive the direction, when sending the signal pulse radial transmission, the radar control 50 directs the antenna 56 at the target 60. By recording the precise position of the antenna 56 at the time of transmission, the radar control 50 fixes the direction by elevation and azimuth. The aircraft systems 46 supplies the location in space of the antenna 56 to the radar control 50 by supplying very complete aircraft positional data. The aircraft systems 46 is tasked with deriving position information (i.e., position, heading, roll, yaw, pitch, etc.) from data received from a Flight Management System (FMS), Inertial Navigation System (INS), and/or a global positioning system (GPS). With the added information that the aircraft systems 46 imparts, the radar control 50 can accurately place the targets in three-dimensional space. In turn, the display processor 42 can take the accurately located targets and store the data defining their location in the memory 43, preferably a three-dimensional volumetric buffer where the absolute locations determine where the buffer stores the reflectivity values.

The display/interface front-end 38 allows the user to request one of several views of the data stored in the memory 43. The pilot-user may request, through the user interface 48, such ordering of the data into a data view as the pilot requires. Such views might include, for example, a plan view of the weather, or the weather at an altitude of 30,000 feet. Embodiments of the weather display system 30 permit the pilot-user to request display of a variety of displays with or without display of weather data determined from reflectivity data. A display with the weather reflectivity data suppressed reduces the amount of information presented on the display device 44. For example, the display may indicate the presence of hail or turbulence.

In accord with the pilot's requests, the user interface 48 generates control signals that it sends to the display processor 42. The display processor 42 recalls the reflectivity values from the appropriate locations relative to the current position of the aircraft and compiles the requested data view. The display processor 42 sends the selected data for presentation on the display device 44 based on settings within the video. U.S. Pat. No. 5,059,967 to Roos*,* and U.S. Pat. 6,690,317 to Szeto et al*.,* both of which are hereby incorporated by reference in their entirety, describe an apparatus and method for displaying weather information.

The displayed weather data, as determined by the radar system 40 or another system, identify certain weather targets, such as rain/moisture, wind shear, or turbulence. Each type of weather target has a characteristic pattern for radar reflection. The radar control 50 examines the reflectivity data by means of an algorithm for the purpose. To specify a particular sort of weather, the pilot enters the parameters of the weather of the desired type using the user interface 48. The display processor 42 executes a particular algorithm based on the entered parameters.

The pilot-user has the option to view the reflectivity values of all locations consistent with the request just as they are stored in the memory 43. More useful to the pilot-user is to selectively prohibit view of the reflectivity values associated with weather objects. To accomplish this, display processor 42 will suppress certain data based upon the pilot's request to include only data associated with other available weather information. Also, terrain information may be optionally displayed.

To accomplish this suppression, the display processor 42 compares the locations consistent with the pilot's requests received from the user interface 48, with the information stored in the database 32. Within the database 32 there exists a mathematical model of the weather information comprising altitude information stored in association with latitude and longitude for each discrete location. Weather information may alternatively be stored using other suitable models, such as, but not limited to, Cartesian coordinates, polar coordinates, or the like. Also, the models may be based on "absolute" geographic location or by a location relative to the craft. Where the database 32 indicates the existence of weather objects, at the position and altitude of a reflected radar signal, the display processor 42 will suppress reflectivity data associated with the weather objects.

Alternative embodiments may employ topologies that are different from the embodiment of the weather display system 30 illustrated in FIGURE 1. For example, the elements of the display/interface front-end 38, a display processor 42, memory 43, database 32 and a display device 44 might not exist in the star configuration displayed in FIGURE 1. For example, these components would exist on one or more busses that would allow interconnectivity of the elements as necessary to accomplish the functions described herein. In some embodiments, the components would be separately addressable on the bus or busses.

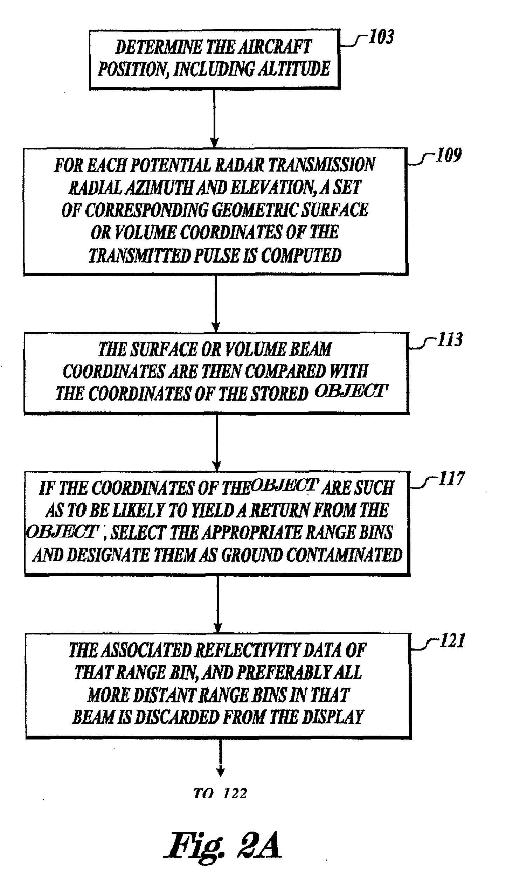

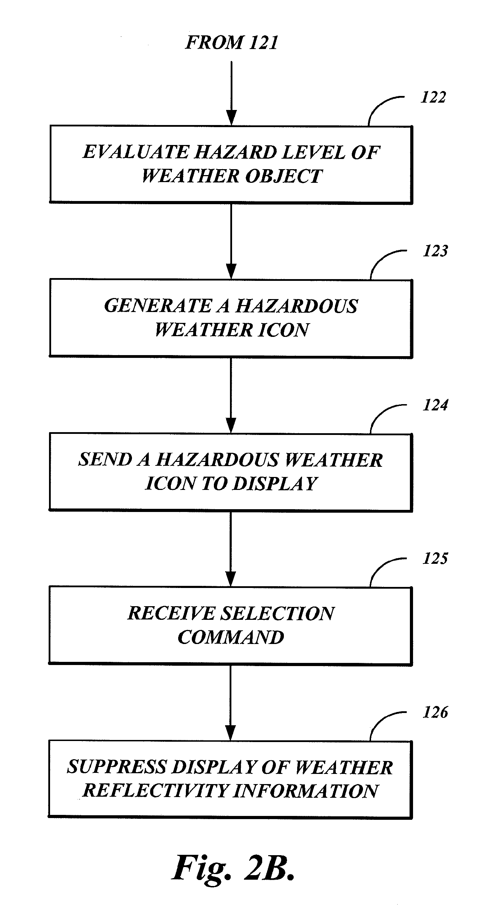

FIGURE 2 illustrates an example process performed by the display processor 42 shown in FIGURE 1. First, at block 103, the display processor 42 receives the positional aircraft data (i.e., position, heading, roll, yaw, pitch, etc.) from a Flight Management System (FMS), Inertial Navigation System (INS), or a global positioning system (GPS).

At block 109, the display processor 42 projects the radial transmission cone of the narrow transmission signal for each radial signal pulse transmission according to azimuth and elevation into real space. The exact location of illuminated space within each radial signal pulse transmission is necessary in order to translate a projection of the radial signal pulse transmission onto the stored mathematical model of the information stored in the database 32, originating from the current position of the aircraft. At block 113, by comparing the real space coordinates of weather objects in the database 32, the display processor 42 is able to determine the points of intersection.

The calculations to project the signal transmission in its cone-shaped propagation pattern over the stored terrain model in the database 32 may employ elaborate trigonometry. However, those skilled in the art are well familiar with the equations allowing for correction for the curvature of radar rays due to atmospheric refraction in a normal atmosphere (Radar Handbook by Merrill Skolnik), although any suitable process may be used.

Given suitable equations, again at block 113, the display processor 42 extrapolates the projections of these cone-shaped transmission patterns to strike a stored model of the weather objects at discrete points. The display processor 42 retrieves the data from the database 32 to perform this extrapolation. Through a quickly iterative process, the display processor 42 calculates the position in real space of an intersection of the projected cones and the weather objects.

Once display processor 42 calculates the position of the intersection points, the display processor 42 then calculates that position in terms of radar elevation, azimuth, and range bin. At block 117, the display processor 42 defines each of these intersections in terms of the spherical coordinate system elevation, azimuth, and range bin (a term explained below but corresponding to radius or radial distance from the aircraft). The display processor 42 then classifies each of the intersection points as weather reflectivity information; meaning that the reflections emanating from the intersection points are likely reflections from weather objects.

At block 121, the display processor 42 segregates the data on any given radial between that reflectivity data emanating from locations that are proximal to the transmitter from the intersection and those distal. The reflectivity data emanating from points distal from the intersection point, including the range bin containing the intersection point, the display processor 42 suppresses. The display processor 42 only sends weather information emanating from points proximal to the transmitter, between it and the intersection point. The information, absent information corresponding to weather reflectivity, is then sent to the display device 44 for display.

At block 122, the display processor 42 evaluates a hazard level of detected weather objects with respect to characteristics of the aircraft. Characteristics such as aircraft weight, size, speed, aerodynamic capabilities or the like may be considered when evaluating the hazard level, level of threat, or level of risk, to the aircraft. At block 123, the display processor 42 generates a hazardous weather icon corresponding to the weather object. Size, color, shading, fill pattern or other characteristics of the hazardous weather icon may be selected based upon the determined hazard level for the weather object. At block 124, the hazardous weather icon is also sent to the display device 44 for display. At block 125, a selection command is received from the pilot-user indicating that only the hazardous weather icon(s) is to be displayed on the display device 44. At block 126, display of the weather reflectivity information, and optionally other types of information, is suppressed.

In some embodiments, the process may be simpler. In view that an embodiment may store reflectivity data in a three-dimensional buffer, and because the buffer assigns storage locations in the memory 43 by virtue of the location of the reflective surfaces in real space, the display processor 42 is not required to recalculate those locations in real space. In that embodiment, the display processor 42 may simply not display reflectivity data from any location in the database 32.

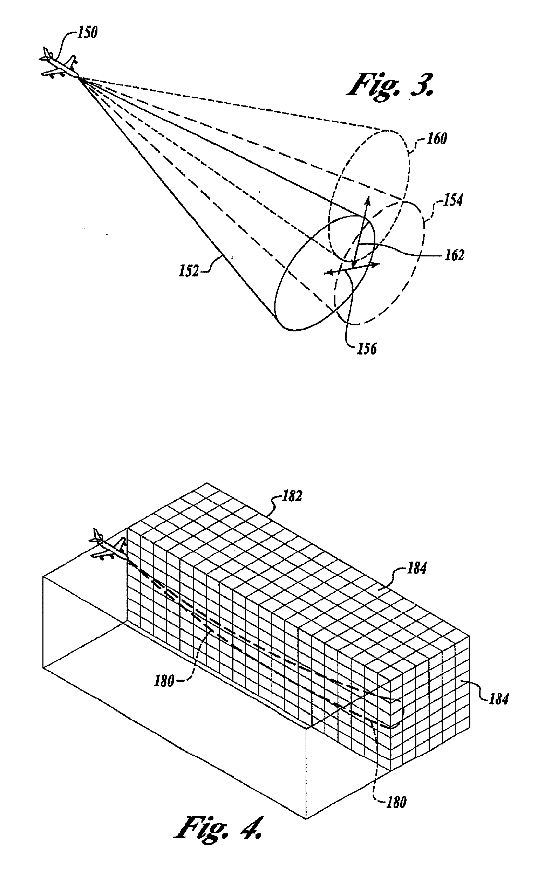

FIGURE 3 illustrates a perspective view of an aircraft 150 displaying three radar signals propagating from the antenna 56 in conical volumes of space 152, 154, and 160 along different radials. As above, the radar control 50 or the display processor 42 defines each radial by azimuth and elevation. In the preferred embodiment, to cover the horizon, the radar control 50 sweeps the antenna 56 in sweeps that are parallel to the horizon; but the radar control 50 could execute sweeps vertically or by some other pattern.

An embodiment of the weather display system 30 uses a memory 43 configured as a bin-based, three-dimensional buffer. Alternatively, any suitable format may be used in a memory device for storing information pertaining to weather objects and/or other objects such as terrain.

As shown in FIGURE 4, the radar control 50 translates the radar return data shown in volume 180 into locations within a three-dimensional buffer 182. Each address in the three-dimensional buffer 182 is termed a "volume cell" or voxel 188. Within the three-dimensional buffer 182, the display processor 42 stores the radar return data values (i.e., reflectivity measurement (dBs)) in coordination with locations within the volume 180.

The three-dimensional buffer can include any of a number of types of data such as (but not limited to) reflectivity, turbulence, lightning, winds aloft, areas of icing hazard, and temperature. This data may be either from the on-board radar system, other systems aboard the aircraft or data communicated to the aircraft from ground stations or other aircraft. The present invention uses the three-dimensional data in the three-dimensional buffer as one means to determine hazard location, hazard severity, and hazard trends (lateral and vertical movement, lateral and vertical growth). This processing includes, but is not limited to, determining hazard centroid location and hazard spatial extent and the rate of changes of centroid location and spatial extent.

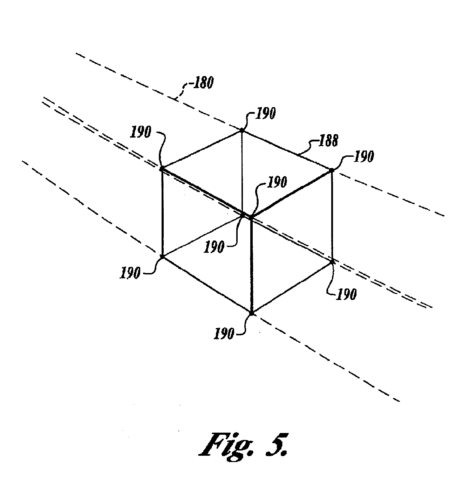

FIGURE 5 shows the boundaries of a single voxel 188. Since each range bin is small (radius of curvature of the bin is large relative to the range depth of the bin) and for real-time processing constraints, straight lines approximate the edges of the range bin. Because of the use of altitude as the third dimension of the volume 180 occupied by the radar return data, the resulting mapping of that data must be curved within the space as illustrated in order for the return data to be stored at the correct location relative to the curved earth. Alternatively, the processor may correct for the earth's curvature by considering the radar volume 180 as curved, as illustrated in FIGURE 4. A series of range bins correspond to each radial transmission, the radial itself, defined by azimuth and elevation of the transmission relative to the absolute horizon, and to a distance. The term "bin" indicates that the particular bin indicates boundary values for the distance indicated by the timing of the reception of a particular radar echo. The discrete distances along the radial are defined by the sampling interval of the reflected pulse.

In an exemplary embodiment, the three-dimensional buffer is a circular buffer. A circular buffer is a block of memory that has two associated pieces of data: a start index and an end index, both of which refer to certain indices in the block of memory. Typically, circular buffers are used to implement queues, or FIFO (first-in, first-out) buffers. When a sample is enqueued in the circular buffer, it is stored at the location of the start index, and the start index is increased by one. When a sample is dequeued in the circular buffer, the value to which the end index points is returned, and the end index is increased by one. The buffer is called circular because when the start and end indices reach the logical end of the buffer, each index is simply reset to point to the first location in the buffer. Once the radar control 50 stores data from a corresponding range bin into the buffer, the data does not have to be copied again when the aircraft moves. Motion compensation of existing data is achieved by the simple act of moving the position reference of the aircraft relative to the buffer.

The three-dimensional buffer can include any of a number of types of data such as (but not limited to) reflectivity, turbulence, lightning, windsaloft, areas of icing hazard, and temperature. This data may be either from the on-board radar system, other systems aboard the aircraft or data communicated to the aircraft from ground stations or other aircraft. The present invention uses the three-dimensional data in the three-dimensional buffer as one means to determine hazard location, hazard severity, and hazard trends (lateral and vertical movement, lateral and vertical growth). This processing includes, but is not limited to, determining hazard centroid location and hazard spatial extent and the rate of changes of centroid location and spatial extent.

The hazards detected, processed and/or stored in the three-dimensional buffer by the present invention could also include results from predictive or "Nowcast" algorithms which use (but are not limited to) meteorogical, geographical, pilot reports (automatic or manual) data as input.

Where the selected display mode would include display of weather reflectivity information of a weather object, the weather display system 30 would suppress display of such weather reflectivity information in response to a request by the pilot-user. By suppressing such weather reflectivity information in the generation of the display, the weather display system 30 can be applied to any weather radar where the return data is stored either in association with a weather object location, or, in association with any particular radar transmission. With such an association, the process of segregating weather reflectivity information from other meaningful data may be based upon radials and range.

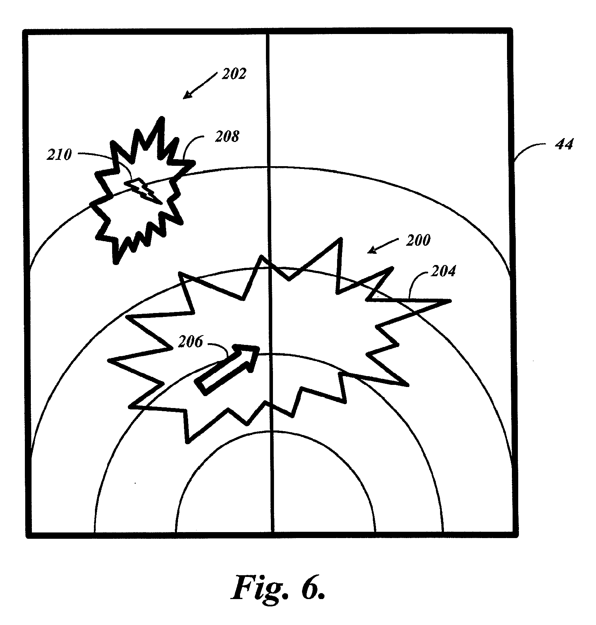

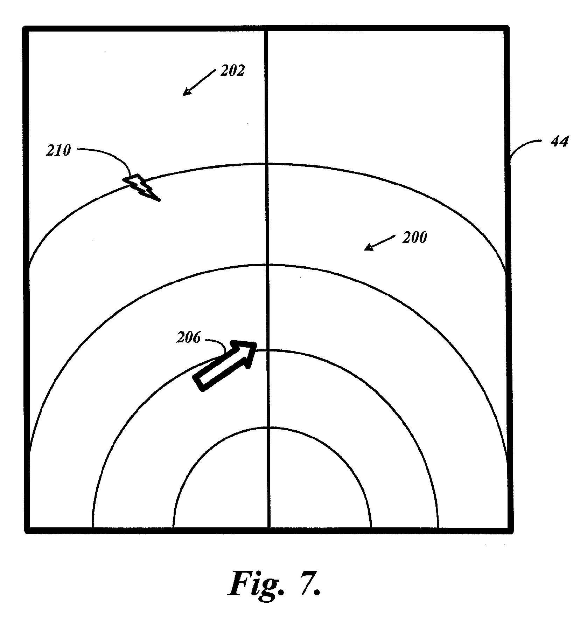

FIGURE 6 is a plan view of a display device 44 with reflectivity data presented thereon. FIGURE 7 is a plan view of a display with reflectivity data suppressed by embodiments of the weather display system 30 such that other weather objects are displayed. In some embodiments, the pilot-user may select display of the weather objects only, display of the reflectivity data only, or a composite of both. Alternatively, or additionally, embodiments may display the reflectivity data and the hazardous weather icons on a vertical view, a three-dimensional view, or a combination of views.

In FIGURE 6, a first weather object 200 and a second weather object 202 are illustrated. The first weather object 200 is defined by boundary 204 that is determined from its respective reflectivity data. Within the first weather object 200 is an icon 206 indicating presence of wind shear. The second weather object 202 is defined by boundary 208 that is determined from its respective reflectivity data. Within the second weather object 202 is an icon 210 indicating presence of lightning.

In FIGURE 7, after suppression of the boundaries 204, 208 determined from the respective reflectivity data, the icon 206 indicating presence of wind shear and the icon 210 indicating presence of lightning remain. Thus, the pilot-user views a display of pertinent weather objects.

Embodiments are operable to display any desirable objects of interest as determinable by associated models. For example, but not limited to, the displayed objects may include hazards such as turbulence, clear-air turbulence, hail, lightning, various levels of severity for rainfall, wind shear, building weather cells, declining weather cells, icing conditions, squall lines, and/or terrain. Embodiments are operable to display a hazardous weather icon that indicates a determined hazard level associated with the weather. The selection of the type of displayed hazardous weather icons are determined from reflectivity information provided by, but not limited to, the onboard weather radar system 40. However, weather reflectivity information may be provided from other sources, such as remote aircraft or ground based sources.

The characteristics of the hazardous weather icon associated with a particular type of weather may be defined so as to readily indicate to the pilot-user the characteristics of the weather. For example, but not limited to, a hazardous weather icon might be displayed with a shape corresponding to lightning, such as an image of a lightning bolt, such as the icon 210. An arrow may be associated with wind shear, such as the icon 206. A plurality of circles may be associated with hail. An icing icon, such as a snow flake or the like, may be associated with icing.

Other alpha and/or numerical parameters may be used to present information pertaining to displayed hazardous weather icons. The alpha and/or numerical parameters may be used to indicate hazardous weather icon attributes such as heights (e.g., storm top height, storm vertical extent), object speeds (e.g., velocity of weather and/or windshears), intensities (e.g., maximum reflectivity, maximum turbulence value), statistics (e.g., lightning strike frequency, growth trends, build rates, probability of hail, lightning and/or icing), and/or object motion (lateral and/or vertical motion).

Other characteristics of the hazardous weather icon may be defined based on the level of hazard of the particular type of weather. A size, a color, a shading, a fill pattern or another characteristic of the hazardous weather icon may be selected based upon the determined hazard level for the weather object. For example, colors and/or fill styles may be used to emphasize displayed hazardous weather icons. For example, green/yellow/red colors may be used for discrimination of progressively severe degrees of hazard. The hazardous weather icons associated with increasingly severe weather may be generally displayed and/or be displayed with a greater degree of size and/or color. For example, a large hazardous lightning storm could be displayed as a large lightning bolt colored red. A non-hazardous lightning storm could be displayed as a relatively small lightning bolt colored green.

As another example, the hazardous weather icon may be indicated on the display device 44 with a solid fill pattern, such as magenta, for a particular type of weather, such as, but not limited to, hazardous turbulence. For example, if the hazardous weather is turbulence and is determined to have a turbulence severity level that is greater than a turbulence threshold level, then the hazardous weather icon is displayed in magenta. Less hazardous or non-hazardous weather, such as the turbulence, might be displayed on the display device 44 using a checkerboard pattern, lined pattern, dot pattern, or other patterned icon with a magenta color. Alternatively, or additionally, a less hazardous or non-hazardous weather icon might be displayed using the same color or a different color than the color used to indicate the more hazardous weather icon.

For example, the hazardous weather icon might be displayed using a green color, a yellow color or a red color. The green color might correspond to a first hazard level, such as a non-threatening level. The yellow color might correspond to a second hazard level that is greater than the first hazard level, such as a moderately threatening level. The red color might correspond to a third hazard level that is greater than the first hazard level and the second hazard level, such as a very hazardous level indicating that the aircraft should avoid the weather associated with that hazardous weather icon.

Hazardous weather icons may be presented as icons or other graphical artifacts. Determining positioning of weather corresponding to a hazardous weather icon, relative to the aircraft, may be provided using any suitable methodology. Icon size, color, fill, boundary, and/or shape may be correlated with the type and/or degree of hazard that a weather object presents. Predicted aircraft travel path, such as the planned flight path of an airplane, may be displayed. Recommendations pertaining to weather avoidance, such as a recommended avoidance flight path, may be indicated on the display device 44.

Information may be presented on display device 44 as a plan view, vertical view, three-dimensional view, or a combination of plan and vertical views. The pilot-user may selectively choose which views are presented, with or without terrain information, weather reflectivity information, and/or hazardous weather icons presented thereon.

In the various embodiments, the pilot-user may be allowed to select among a plurality of hazardous weather icons for display such that non-selected hazardous weather icons are not displayed, or suppressed. For example, the pilot-user may select display of severe hazards, such that hazardous weather icons corresponding to moderately sever or non-hazardous weather is not displayed. Here, severity of the hazard is compared to a threshold. Display of the hazardous weather icons occurs when the severity exceeds the threshold. Alternatively, or in addition to, a hazardous weather icon associated with the closest and/or the most severe weather may be displayed. Alternatively, or in addition to, the pilot-user may select among a plurality of objects for suppression.

In the various embodiments, supplemental information such as the predicted path of movement of the craft, predicted location and/or time of intersection with the weather object, and/or point of closest approach may be displayed. For example, the display may indicate to the pilot-user the predicted path, and thereby indicate intersection with the weather object or the closest approach to the weather object. Additionally, the degree of hazard presented by the weather object, in view of the predicted path of flight, allows generation of recommended courses of action to the pilot-user. For example, course recommendations for avoidance of the weather object, course recommendations of a safest approach distance, or speed/altitude recommendations to mitigate the impact of the weather object are made by some embodiments. In one embodiment, a "keep-out" region or volume may be presented on the display.

Embodiments may be operable to provide acoustic information, such as alarms or the like that the pilot-user hears. Some embodiments may present other types of aural or visual warning information. Further, embodiments may identify hazard regions to be avoided. Such supplemental information may be prioritized based upon proximity to the predicted path of movement of the craft.

In addition to radar resident on the craft, information pertaining to displayable objects may be provided by other local devices or remote devices that are ground based or that reside on other aircraft. For example, sensors may detect temperature (thermometers), wind speed (a plurality of pressure sensors), lightning detection (Radio Atmospheric signal or Sferic), and/or clear-air turbulence (accelerometers). Non-weather related information may be displayed, such as date, time, location, speed over ground, bearing, and direction of travel. For example, remote devices located on other aircraft and/or at a ground installation may provide information to the receiving aircraft in the form of pilot reports (PIREPs) or other suitable information communicated over air-to-air links and/or ground-to-air links. For example, the aircraft may receive information from numerous land based devices (ground-based radar, ground-based lightning detection, ground-based predictive models that use meteorological and/or other aircraft reports). On-board or remote devices may include a global positioning system (GPS) that provides location information pertaining to the weather and/or on-weather related information. Some embodiments may be configured to transmit information corresponding to the generated hazardous weather icons to other aircraft or ground installations.

In the various embodiments, any suitable identification and discrimination technology may be used to determine and display objects and/or information of interest on the display device 44. Such objects and/or information may be displayed with, or without, reflectivity data.
The embodiments of the invention in which an exclusive property or privilege is claimed are defined as follows:

## Claims

1. A method for presenting information on a display (44) of an aircraft, the method comprising:
displaying on the aircraft display terrain information, weather reflectivity information, and at least one hazardous weather icon (206, 210) corresponding to the weather, wherein the hazardous weather icon (206, 210) indicates a determined hazard level associated with the weather;
receiving a selection to display only the hazardous weather icon (206, 210); and
in response to receiving the selection, continuing display of the hazardous weather icon (206, 210) and suppressing display of at least one of the terrain information and the weather reflectivity information.

2. The method of Claim 1, further comprising:
displaying the hazardous weather icon (206, 210) with one of a plurality of colors and wherein each color uniquely corresponds to one of a plurality of hazard levels.

3. The method of Claim 2, further comprising:
displaying on the hazardous weather icon (206, 210) with one of a first color, a second color and a third color, wherein the first color corresponds to a first hazard level, wherein the second color corresponds to a second hazard level that is greater than the first hazard level, and wherein the third color corresponds to a third hazard level that is greater than the first hazard level and the second hazard level.

4. The method of Claim 1, further comprising:
displaying the hazardous weather icon (206, 210) with one of a first fill pattern corresponding to a first hazard level and a second fill pattern corresponding to a second hazard level that is greater than the first hazard level.

5. The method of Claim 1, further comprising:
displaying the hazardous weather icon (206, 210) with one of a first size corresponding to a first hazard level and a second size corresponding to a second hazard level that is greater than the first hazard level.

6. The method of Claim 1, wherein displaying the hazardous weather icon (206, 210) with the shape comprises:
displaying the hazardous weather icon (206, 210) with a first shape when the weather corresponds to lightning;
displaying the hazardous weather icon (206, 210) with a second shape when the weather corresponds to wind shear;
displaying the hazardous weather icon (206, 210) with a third shape when the weather corresponds to hail; and
displaying the hazardous weather icon (206, 210) with a fourth shape when the weather corresponds to icing.

7. The method of Claim 1, further comprising:
displaying with the hazardous weather icon (206, 210) at least one numerical parameter corresponding to the determined hazard level associated with the weather, wherein the numerical parameter specifies at least one of a temperature, a storm top location, a storm top height, a storm vertical extent, a storm buildup rate, a velocity, a maximum reflectivity value, a maximum turbulence level, a probability of hail, a probability of lightning, and a probability of icing conditions.

8. The method of Claim 1, further comprising:
displaying with the hazardous weather icon (206, 210) on a vertical view along a specified path.

9. The method of Claim 1, further comprising:
determining that the hazardous weather is turbulence with a turbulence severity level greater than a turbulence threshold level; and
displaying the hazardous weather icon (206, 210) in magenta in response to determining that the hazardous weather is the turbulence.

10. The method of Claim 1, further comprising:
determining weather reflectivity information from a plurality of volume cells of a three-dimensional buffer; and
determining at least one of a hazard location, the hazard level, and a hazard trend based upon the weather reflectivity information for the plurality of volume cells.
